# EUROPEAN PATENT APPLICATION

(11) **EP 4 570 497 A1**
(43) Date of publication of application: **18.06.2025**
(21) Application number: 23383267.4
(22) Date of filing: 11.12.2023
(51) Int. Cl.: B32B 27/08, B32B 27/30, B32B 27/32, C08J 5/18, C08L 23/04

(54) **MACHINE DIRECTION ORIENTED FILMS**

(71) Applicant: Dow Global Technologies LLC, Midland, MI 48674 (US)
(72) Inventor: SAHU, Nrusingh, 43006 Tarragona (ES); EVANGELIO ARAUJO, Laura, 43006 Tarragona (ES); HILL, Martin Keith, 43006 Tarragona (ES)
(74) Representative: Elzaburu S.L.P.

(57) **Abstract**

Embodiments of the present invention relate to machine direction oriented films having a matte surface. The films according to embodiments disclosed herein include a first outer layer, a core, and a second outer layer, wherein the first outer layer has a matte surface and a surface of roughness of greater than 50 microns. The first outer layer includes a high density polyethylene and a polyethylene elastomer or plastomer. The machine direction oriented film can have excellent optical properties and can be recyclable.

## Description

### Technical Field

Embodiments of the present disclosure generally relate to machine direction oriented films and processes for making the same.

### Introduction

As global interest solidifies in reducing packaging waste and making flexible packaging more sustainable, there is an increasing amount of effort to develop materials and technologies that would enhance the sustainability of food packaging. Packaging film structures are often formed of multiple types of polymeric materials including, for example, polyethylene, polypropylene, ethylene vinyl alcohol, polyethylene terephthalate, polyamide and others. Such materials are typically combined to achieve a balance of properties that are beyond the reach of a single material type. However, due to the dissimilarity of these materials, the final package is typically not easy to recycle and a blend of materials can also create issues with process control. Thus, there is also a movement towards single component structures (e.g., all polyethylene structures) to improve the recyclability profile and to reduce process control issues. In the case of all polyethylene structures, for example, certain optical performance properties will need to be enhanced to maintain the level of performance expected of these structures when formed from different polymeric materials. Thus, new film structures are needed to bridge performance deficiencies of polyolefins relative to other material types.

One area in the packaging space is oriented films having a matte surface. The orientation of films in the machine direction (MDO), cross direction, or both directions (i.e., biaxially oriented film) can improve properties such as optics, tensile strength, stiffness, low elongation, and thermal resistance. Oriented films typically are used as a print substrate to form laminates, but demand for single film solutions continues to rise as does the demand for more downgauged, sustainable, and recyclable films made from mono-materials. A matte surface can be defined in terms of optical properties with lower gloss and higher haze values as discussed herein. A common approach to obtaining a matte surface is to use a blend of polymers or inorganic fillers. For example, some methods use matte oriented polyethylene terephthalate and polypropylene to deliver a matte surface whereas other methods employ matte coatings. In addition to incorporating non-polyethylene polymers, these methods introduce additional process(es) to provide matte finish. Coextrusion of a polyethylene based matte layer is a more streamlined process, but coextrusion still typically relies on blending non-polyethylene components like polypropylene, cyclic olefinic copolymers, and micron sized inorganic particles in a layer to achieve matte finish. Furthermore, even when polyethylene resin designs are used, certain polyethylene resins are prone to dusting (i.e., powder formation), which, for example, can lead to contamination of film fabrication equipment. This phenomena as well as others are compounded when attempting to obtain matte surfaces on oriented films because the orientation and matte surface are created and impacted via, for example, the quick passing through chrome heated rollers to stretch the semi-molten state layers of the film.

Accordingly, there remains a need for machine direction oriented films having a matte surface that can be recyclable and can be formed without the need to be mixed with other polymers.

### Summary

The present invention provides machine direction oriented films having a matte surface. The films can be recyclable and can have excellent optical properties for applications such as food packaging.

In a first aspect, a machine direction oriented film is disclosed. The machine direction oriented film comprises a first outer layer, a second outer layer, and a core, the core comprising one or more core layers. The core is positioned between the first outer layer and the second outer layer. The first outer layer comprises less than 50 wt.% of a high density polyethylene having a density from 0.940 to 0.973 g/cm³ and at least 50 wt.% of a polyethylene plastomer or elastomer having a density between 0.855 to 0.900 g/cm³, wherein weight percent is based on the total weight percent of polymers in the first outer layer. The difference between the densities of the high density polyethylene and the polyethylene plastomer or elastomer can be at least 0.070 g/cm³. The first outer layer is a matte surface and a surface roughness of greater than 0.50 µm. The film is stretched in the machine direction at a ratio of at least 4:1.

In a second aspect, a machine direction oriented film is also disclosed. The machine direction oriented film according to this aspect comprises a first outer layer, a second outer layer, and a core, the core comprising one or more core layers. The core is positioned between the first outer layer and the second outer layer. The first outer layer comprises less than 50 wt.% of a high density polyethylene having a density from 0.940 to 0.973 g/cm³ and at least 50 wt.% of a polyethylene plastomer or elastomer having a density between 0.855 to 0.910 g/cm³, wherein weight percent is based on the total weight percent of polymers in the first outer layer. The first outer layer has a matte surface and a surface roughness of greater than 0.50 µm. The film is stretched in the machine direction at a ratio of at least 4:1, and is stretched at a temperature greater than 95°C.

In a third aspect, an article is disclosed, wherein the article comprises the machine direction oriented film according to the first or second aspect.

In a fourth aspect, a process for making a machine direction oriented film is disclosed. The process comprises providing a high density polyethylene having a density from 0.940 to 0.973 g/cm³; providing a polyethylene plastomer or elastomer having a density between 0.855 to 0.910 g/cm³, wherein the difference between the densities of the high density polyethylene and the polyethylene plastomer or elastomer is at least 0.070 g/cm³; coextruding a film comprising at least a first outer layer, a second outer layer, and a core, the core comprising one or more core layers; wherein the first outer layer comprises less than 50 wt.% of the high density polyethylene and less than 50 wt.% of the polyethylene plastomer or elastomer; stretching the film in the machine direction at ratio of at least 4:1 and at a temperature greater than 95°C.

As discussed below, the present invention also provides labels and packages (i.e., articles), formed from any of the inventive films disclosed herein.

These and other embodiments are described in more detail in the Detailed Description.

### Detailed Description

Unless stated to the contrary, implicit from the context, or customary in the art, all parts and percents are based on weight, all temperatures are in °C, and all test methods are current as of the filing date of this disclosure.

The term "composition," as used herein, refers to a mixture of materials which comprises the composition, as well as reaction products and decomposition products formed from the materials of the composition.

"Polymer" means a polymeric compound prepared by polymerizing monomers, whether of the same or a different type. The generic term polymer thus embraces the term homopolymer (employed to refer to polymers prepared from only one type of monomer, with the understanding that trace amounts of additives and impurities can be incorporated into the polymer structure), and the term interpolymer as defined hereinafter. Trace amounts of additives or impurities (for example, catalyst residues) may be incorporated into and/or within the polymer. A polymer may be a single polymer, a polymer blend or a polymer mixture, including mixtures of polymers that are formed *in situ* during polymerization.

The terms "olefin-based polymer" or "polyolefin", as used herein, refer to a polymer that comprises, in polymerized form, a majority amount of olefin monomer, for example ethylene or propylene (based on the weight of the polymer), and optionally may comprise one or more comonomers.

The term, "ethylene/α-olefin copolymer," as used herein, refers to a copolymer that comprises, in polymerized form, a majority amount (>50 mol %) of ethylene monomer, and an α-olefin, as the only two monomer types.

The term "α-olefin", as used herein, refers to an alkene having a double bond at the primary or alpha (α) position.

"Polyethylene" or "ethylene-based polymer" shall mean polymers comprising a majority amount (>50 mol %) of units which have been derived from ethylene monomer. This includes polyethylene homopolymers, ethylene/α-olefin interpolymers, and ethylene/α-olefin copolymers. Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); Medium Density Polyethylene (MDPE); High Density Polyethylene (HDPE); Enhanced Polyethylene; polyethylene elastomers; and polyethylene plastomers. These polyethylene materials are generally known in the art; however, the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homo-polymerized or copolymerized in autoclave or tubular reactors at pressures above 14,500 psi (100 MPa) with the use of free-radical initiators, such as peroxides (see for example US 4,599,392, which is hereby incorporated by reference). LDPE resins typically have a density in the range of 0.916 to 0.935 g/cm³.

The term "LLDPE", includes both resins made using the traditional Ziegler-Natta catalyst systems and chromium-based catalyst systems as well as single-site catalysts, including, but not limited to, bis-metallocene catalysts (sometimes referred to as "m-LLDPE"), constrained geometry catalysts (CGC), and molecular catalysts. Resins include linear, substantially linear, or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art.

The term "MDPE" refers to polyethylenes having densities from 0.926 to 0.940 g/cm³. "MDPE" is typically made using chromium or Ziegler-Natta catalysts or using single-site catalysts including, but not limited to, bis-metallocene catalysts, constrained geometry catalysts, and molecular catalysts, and typically have a molecular weight distribution ("MWD") greater than 2.5.

The term "HDPE" refers to polyethylenes having densities greater than about 0.940 g/cm³ and up to about 0.975 g/cm³, which are generally prepared with Ziegler-Natta catalysts, chrome catalysts or single-site catalysts including, but not limited to, bis-metallocene catalysts and constrained geometry catalysts.

The term "ULDPE" refers to polyethylenes having densities of 0.880 to 0.912 g/cm³, which are generally prepared with Ziegler-Natta catalysts, chrome catalysts, or single-site catalysts including, but not limited to, bis-metallocene catalysts and constrained geometry catalysts.

"Polyethylene plastomers or elastomers" are substantially linear, or linear, ethylene/α-olefin copolymers containing homogeneous short-chain branching distributions comprising units derived from ethylene and units derived from at least one C₃-C₁₀ α-olefin comonomer, or at least one C₄-C₈ α-olefin comonomer, or at least one C₆-C₈ α-olefin comonomer. Polyethylene plastomers/elastomers have a density from 0.870 g/cm³, or 0.880 g/ cm³, or 0.890 g/ cm³ to 0.900 g/ cm³, or 0.902 g/ cm³, or 0.904 g/ cm³, or 0.909 g/ cm³, or 0.910 g/ cm³, or 0.917 g/cm³. Nonlimiting examples of polyethylene plastomers/ elastomers include AFFINITY^{™} plastomers and elastomers (available from The Dow Chemical Company), EXACT Plastomers (available from ExxonMobil Chemical), Tafmer (available from Mitsui), Nexlene^{™} (available from SK Chemicals Co.), and Lucene (available LG Chem Ltd.).

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

The present invention is directed to a machine direction oriented film comprising a first outer layer, a second outer layer, and a core. The core comprising one or more core layers, where the core is between the first and second outer layers. The first outer layer has a matte surface. A "matte surface" as described herein refers to a film surface having a surface roughness of greater than 0.50 µm and/or a total haze of greater than 50%, and/or a gloss of less than 10%, where surface roughness, total haze, and gloss are measured according to the test methods below.

The first outer layer comprises less than 50 wt.% of a high density polyethylene having a density from 0.940 to 0.973 g/cm³, wherein weight percent is based on the total weight percent of polymers in the first outer layer. The first outer layer can comprise less than 45 wt.%, less than 40 wt.%, less than 30 wt.%, less than 25 wt.%, or a range of from 5 to 45 wt.%, from 10 to 40 wt.%, from 15 to 35 wt.%, from 15 to 30 wt.%, or from 15 to 25 wt.% of a high density polyethylene having a density from 0.940 to 0.973 g/cm³, wherein weight percent is based on the total weight percent of polymers in the first outer layer. The high density polyethylene of the first outer layer can have a density of from a lower limit of 0.940, 0.945, 0950, 0.955, 0.960, 0.965 g/cm³ to an upper limit of 0.973, 0.971, 0.969, 0.967, 0.965, 0.963, 0.961, or 0.960 g/cm³.

In some embodiments, the high density polyethylene has at least one of the following characteristics: a) comprises 1-hexene, 1-octene, or combination thereof; b) a homopolymer; c) a melt index (I₂) of less than 10.0 g/10 min; or d) a density of greater than 0.960 g/cm³. The high density polyethylene can comprise 1-hexene or 1-octene and be void of other alpha-olefins. The high density polyethylene can have a melt index of less than less than 10.0 g/10 min, less than 8.0 g/10 min, less than 6.0 g/10 min, 4.0 g/10 min, or less than 3.0 g/10 min, or less than 2.0 g/10 min, or less than 1.0 g/10 min.

Commercially available examples of high density polyethylenes that can be used in the first outer layer include those commercially available from The Dow Chemical Company (Midland, MI) under the name ELITE^{™}, and those commercially available from Exxon Mobile Chemical Company, including HTA 108 and HD26, and those commercially available from TotalEnergies, including Lumicene^{®} M6012 EP.

In some embodiments, the first outer layer comprises at least 50 wt.% of a polyethylene plastomer or elastomer having a density between 0.855 to 0.910 g/cm³, wherein weight percent is based on the total weight percent of polymers in the first outer layer. In some embodiments, the first outer layer comprises at least 50 wt.% of a polyethylene plastomer or elastomer having a density between 0.855 to 0.900 g/cm³, wherein weight percent is based on the total weight percent of polymers in the first outer layer. The first outer layer can comprise at least 50 wt. %, at least 55 wt.%, at least 60 wt.%, at least 65 wt.%, at least 70 wt.%, at least 75 wt.%, or a range of from 55 to 90 wt.%, from 60 to 85 wt.%, from 65 to 85 wt.%, from 70 to 85 wt.%, or from 75 to 85 wt.% of a polyethylene plastomer or elastomer, wherein weight percent is based on the total weight percent of polymers in the first outer layer. The polyethylene plastomer or elastomer of the first outer layer can have a density from a lower limit of 0.855, 0.860, 0.865, 0.870, 0.875, 0.880, 0.883, 0.885, or 0.890, to an upper limit of 0.900, 0.895, 0.890, 0.885, 0.880, 0.875, 0.870, 0.865, or 0.860 g/cm³.

In some embodiments, the polyethylene plastomer or elastomer has at least one of the following characteristics: a) comprises 1-hexene, 1-octene, or combination thereof; b) a melt index (I₂) of less than 10.0 g/10 min; or c) a density of 0.860 to 0.890 g/cm³. The polyethylene plastomer or elastomer can comprise 1-hexene or 1-octene and be void of other alpha-olefins. The polyethylene plastomer or elastomer can have a melt index (I₂) of less than 8.0 g/10 min, less than 6.0 g/10 min, less than 4.0 g/10 min, or less than 2.0 g/10 min.

Commercially available examples of polyethylene elastomers or plastomers that can be used in the first outer layer include those commercially available from The Dow Chemical Company (Midland, MI) under the name AFFINITY^{™} including, for example, AFFINITY^{™} VP 8770G1; EXACT Plastomers (available from ExxonMobil Chemical), Tafmer (available from Mitsui), Supreme and Nexlene^{™} (available from SK Chemicals Co.), and Lucene (available LG Chem Ltd.); Queo Plastomers (available from Borealis).

In some embodiments, the above density ranges for the high density polyethylene and polyethylene plastomer or elastomer can be used, wherein the difference between the densities of the high density polyethylene and the polyethylene plastomer or elastomer is at least 0.070 g/cm³. The difference in the densities can be at least 0.075 g/cc, or at least 0.80 g/cc, or at least 0.90 g/cc, or at least 0.95 g/cc. Without being bound by theory, the matte surface of the outer layer can be formed as a result of the difference in densities and crystalline structures between the high density polyethylene and the polyethylene plastomer or elastomer.

In some embodiments, the first outer layer comprises between 10 to 30 wt.% of the high density polyethylene and between 90 to 70 wt.% of the polyethylene plastomer or elastomer, wherein weight percent is based on the total weight percent of polymers in the first outer layer.

The first outer layer has a matte surface and a surface roughness of greater than 0.50 µm, where surface roughness is measured in accordance with the test methods below. The first outer layer can have a surface roughness of greater than 0.50 µm, greater than 0.60 µm, or greater than 0.70 µm, or greater than 0.75 µm, or greater than 0.80 µm or greater than 0.90 µm, or greater than 0.93 µm.

In some embodiments, the first outer layer has an overall density of less than 0.913 g/cm³, or less than 0.910 g/cm³, or less than 0.905 g/cm³.

The second outer layer can comprise an LLDPE, LDPE, MDPE, HDPE, or a combination thereof. In some embodiments, the second outer layer can comprise an ethylene vinyl alcohol. In some embodiments, the second outer layer comprises a blend of HDPE polymers having a combined density of greater than 0.940 g/cm³. This can assist with the structure of food packaging films.

In some embodiments, the film comprises at least 95 wt.%, at least 97 wt.% or at least 99 wt.% ethylene-based polymers, based on the total weight of polymers in the film. In some embodiments, the film is void of polymers other than ethylene-based polymers.

The film is stretched in the machine direction at a ratio of at least 4:1. In some embodiments, the film is stretched in the machine direction at a ratio of at least 5:1, 6:1, 7:1, or more. An MDO film is a uniaxially oriented film. The stretching or orienting of the film is performed by way of machine direction orientation rolls, via tentering, or via intermeshing gears whereby the film is ring rolled, or otherwise incrementally stretched in the machine direction.

The film is stretched at a temperature to form an oriented film. In some embodiments, the film is stretched at a temperature greater than 95°C, or greater than 100°C, or greater than 105°C, or greater than 110°C. This temperature is the temperature of the highest temperature roller as illustrate below in the examples. In some embodiments, the film is stretched at a temperature between 100 to 125°C. In some embodiments, the first outer layer has a surface roughness of greater than 0.60 µm, when the film is stretched at a temperature of 115°C.

The oriented film comprises at least three layers-a first outer layer, a second outer layer, and a core comprising at least one core layer. The oriented film may comprise 4, 5, 6, 7, 8, 9, 10 or more layers and include additional layers such as a tie layer or barrier layer. The oriented film may have an A/B/C structure, where the first outer layer is "A," the one core layer is "B," and the second outer layer is "C." The oriented film according to embodiments disclosed herein can have a A/B/C/D/E structure, where A is the first outer layer, B/C/D are the core comprising three core layers with C is a filler layer, and D is a tie layer, and E is the second outer layer. In some embodiments, the second outer layer is a barrier layer. In some embodiments, the core comprises greater than 50 wt.% polyethylene having a density greater than 0.935 g/cm³, wherein weight percent is based on the total weight of polymers in the core.

The film and layers of the film can have a variety of thicknesses. For example, in some embodiments, the film has a thickness between 20 and 80 microns after stretching. In some embodiments, the films has a thickness between 100 to 200 microns before stretching. In some embodiments, the first outer layer comprises greater than 15% of the thickness of the film, where thickness is based on total thickness of the film.

In some embodiments, the first outer layer has at least one of the following characteristics: a total haze of greater than 75%; a gloss of less than 15; or a surface roughness of greater than 0.80 µm. The haze, gloss, and surface roughness are measured in accordance with the test methods described below. The first outer layer can have a total haze of greater than 75%, or greater than 80%, or greater than 85%. The first outer layer can have a gloss at 45° of less than 15, less than 10, or less than 5.

Also disclosed herein is a process for making a machine oriented film. The process comprise providing a high density polyethylene having a density from 0.940 to 0.973 g/cm³; providing a polyethylene plastomer or elastomer having a density between 0.855 to 0.910 g/cm³, wherein the difference between the densities of the high density polyethylene and the polyethylene plastomer or elastomer is at least 0.070 g/cm³; coextruding a film comprising at least a first outer layer, a second outer layer, and a core, the core comprising one or more core layers; wherein the first outer layer comprises less than 50 wt.% of the high density polyethylene and less than 50 wt.% of the polyethylene plastomer or elastomer; stretching the film in the machine direction at ratio of at least 4:1 and at a temperature greater than 95°C.

It should be understood that any of the foregoing layers of the films can further comprise one or more additives as known to those of skill in the art such as, for example, antioxidants, ultraviolet light stabilizers, thermal stabilizers, slip agents, antiblock agent, antistatic agents, pigments or colorants, processing aids, crosslinking catalysts, flame retardants, fillers and foaming agents.

Embodiments of the present invention also provide articles formed from the oriented film described herein. Examples of such articles can include packages, flexible packages, and pouches. In some embodiments, packages of the present invention can comprise a liquid, a powder, a food product, or other items. Articles and packages of the present invention can be formed from the laminate disclosed herein using techniques known to those of skill in the art in view of the teachings herein. Embodiments of the present invention also comprise articles such as labels formed from or incorporating films of the present invention. Such labels can be made from the inventive polyethylene compositions using techniques known to those having ordinary skill in the art based on the teachings herein. In one embodiment, the films of the present invention can be used in a flow wrap sealed package.

### TEST METHODS

Unless otherwise indicated herein, the following analytical methods are used in describing aspects of the present invention:

### Melt Index

Melt index I₂ (or I2) is measured in accordance to ASTM D-1238 (method B) at 190°C and at 2.16 kg. Their values are reported in g/10 min.

### Density

Samples for density measurement are prepared according to ASTM D4703 Annex A. 1 Proc C. Measurements were made, according to ASTM D792, Method B, within one hour of sample pressing. Values are reported in grams per cubic centimeter (g/cc or g/cm³).

### Total Haze

Haze is measured according to ASTM D 1003. A Hazegard Plus (BYK-Gardner USA; Columbia, MD) was used for testing. For each test, 5 samples were examined, and an average was reported.

### Gloss

Gloss at an angle of 45° is measured according to ASTM D2457 on a BYK-Gardner (Columbia, MD) micro-gloss 45 degree gloss meter (Columbia, MD). For testing the specimens are placed in a telescoping hoop to ensure there are no wrinkles/folds in the film. The specimen is placed on a black background and the gloss meter placed on the specimen and a reading taken. Five replicates are measured per sample.

### Surface Roughness

A Keyence VK-X200K LSM, laser scanning confocal microscopy, is used to measure surface roughness. A small piece of each film is cut and mounted on a glass microscope slide using double-sided and frosted cellophane tape. The mounted films are sputter coated using Ir prior to imaging to enhance the reflection of the laser form the pellet surface. Five replicate fields of view are collected for each film sample. The resultant height map data are used to calculate the surface texture parameters. Areal roughness parameters are generated using the ISO 25178 Surface Texture Measurement Module within the Keyence VK Analyzer (version 3.4.01) software.

### Examples

The following examples illustrate features of the present disclosure but are not intended to limit the scope of the disclosure.

**Table 1 - Materials Used**

| **Material** | **Description** |
|---|---|
| **ELITE^{™} 5960G1** | HDPE - 0.85 dg/min MI and 0.962 g/cc density |
| **ELITE^{™} 5940ST** | HDPE - 0.80 dg/min MI and 0.941 g/cc density |
| **ELITE^{™} 5400GS** | HDPE - 1.0 dg/min MI and 0.916 g/cc density |
| **ELITE^{™} AT 6900** | HDPE - 1.0 dg/min and 0.969 g/cc density |
| **AFFINITY^{™} PL 1880G** | Polyethylene plastomer - 1.0 dg/min MI and 0.902 g/cc density |
| **AFFINITY^{™} EG 8100G** | Polyethylene plastomer - 1.0 dg/min MI and 0.870 g/cc density |
| **AFFINITY^{™} VP 8770G1** | Polyethylene plastomer - 1.0 dg/min MI and 0.885 g/cc density |

Machine direction oriented films, designated as Inventive Examples and Comparative Examples, are formed. Blown films with an initial thickness of 139µm are produced on a Macchi 5-layer coextrusion line with 300mm die diameter and blow-up ratio of 2.5. The layer configuration and composition are noted below. The films are subsequently stretched at a ratio of 6:1 in the machine direction on a commercially available POTOP, MDO stretching unit according to the roller speeds and temperatures provided below.
The MDO processing conditions for stretching of the films are reported in Table 2.

**Table 2 - MDO Processing Conditions for Inventive Examples and Comparative Example 2**

| **Roller** | **Roller Function** | **Roller speed (m/min)** | **Temperature (°C)** |
|---|---|---|---|
| **1** | Preheating | 2 | 100 |
| **2** | Preheating | 2.1 | |
| **3** | Preheating | 2.2 | 105 |
| **4** | Preheating | 2.3 | |
| **5** | Preheating | 2.4 | 112 |
| **6** | Preheating | 2.5 | |
| **7** | Preheating | 3 | 115 |
| **8** | Stretching | 12 | |
| **9** | Annealing | 12 | 95 |
| **10** | Annealing | 12 | |

| MDO Processing Conditions for Comparative Example 1 | | | |
|---|---|---|---|
| **Roller** | **Roller Function** | **Roller speed (m/min)** | **Temperature (°C)** |
| **1** | Preheating | 2 | 105 |
| **2** | Preheating | 2.1 | |
| **3** | Preheating | 2.2 | 110 |
| **4** | Preheating | 2.3 | |
| **5** | Preheating | 2.4 | 115 |
| **6** | Preheating | 2.5 | |
| **7** | Preheating | 3 | 115 |
| **8** | Stretching | 12 | |
| **9** | Annealing | 12 | 95 |
| **10** | Annealing | 12 | |

**Table 3 - Layer Distribution of Films with Layer E as First Outer Layer**

| **Inventive Example 1** | | | | |
|---|---|---|---|---|
| **A** | **B** | **C** | **D** | **E** |
| 16% | 20% | 20% | 20% | 24% |
| 75% ELITE 5960G1 | 70% ELITE 5940ST | 30% ELITE 5940ST | ELITE 5940ST | 80% AFFINITY VP 8770G1 |
| 25% ELITE 5400GS | 30% ELITE 5400GS | 70% ELITE 5400GS | | 20% ELITE AT 6900 |

| **Inventive Example 2** | | | | |
|---|---|---|---|---|
| **A** | **B** | **C** | **D** | **E** |
| 16% | 20% | 20% | 20% | 24% |
| 75% ELITE 5960G1 | 70% ELITE 5940ST | 30% ELITE 5940ST | ELITE 5400GS | 80% AFFINITY EG 8100G |
| 25% ELITE 5400GS | 30% ELITE 5400GS | 70% ELITE 5400GS | | 20% ELITE AT 6900 |

| **Comparative Example 1** | | | | |
|---|---|---|---|---|
| **A** | **B** | **C** | **D** | **E** |
| 15% | 20% | 30% | 20% | 15% |
| ELITE 5960G1 | 70% ELITE 5940ST | 30% ELITE 5940ST | 70% ELITE 5940ST | ELITE 5960G1 |
| | 30% ELITE 5400GS | 70% ELITE 5400GS | 30% ELITE 5400GS | |

| **Comparative Example 2** | | | | |
|---|---|---|---|---|
| **A** | **B** | **C** | **D** | **E** |
| 16% | 20% | 20% | 20% | 24% |
| 75% ELITE 5960G1 | 70% ELITE 5940ST | 30% ELITE 5940ST | ELITE 5940ST | 80% AFFINITY PL 1880G |
| 25% ELITE 5400GS | 30% ELITE 5400GS | 70% ELITE 5400GS | | 20% ELITE AT 6900 |

**Table 4 - Haze Values as a Function of Stretching T for Inventive Example 1**

| | **Haze (%) Stretching T = 115°C** | **Haze (%) Stretching T = 100°C** | **Haze (%) Stretching T = 80°C** |
|---|---|---|---|
| **Inventive Example 1** | 93 | 77.1 | 19.4 |

**Table 5 - Gloss, Haze and Roughness of Inventives and Comparatives**

| | **IE1** | **IE2** | **CE1** | **CE2** |
|---|---|---|---|---|
| **Gloss 45°** | 1.7 | 3.4 | 22.9 | 17.8 |
| **Total haze (%)** | 93.0 | 90.7 | 24.2 | 26.3 |
| **Surface Roughness (µm)** | 0.973 | 0.942 | 0.136 | 0.150 |

## Claims

1. A machine direction oriented film comprising:
a first outer layer, a second outer layer, and a core, the core comprising one or more core layers; wherein the core is positioned between the first outer layer and the second outer layer, wherein the first outer layer comprises less than 50 wt.% of a high density polyethylene having a density from 0.940 to 0.973 g/cm³ and at least 50 wt.% of a polyethylene plastomer or elastomer having a density between 0.855 to 0.900 g/cm³, wherein weight percent is based on the total weight percent of polymers in the first outer layer, and wherein the difference between the densities of the high density polyethylene and the polyethylene plastomer or elastomer is at least 0.070 g/cm³, and wherein the first outer layer has a matte surface and a surface roughness of greater than 0.50 µm, and the film is stretched in the machine direction at a ratio of at least 4:1.

2. A machine direction oriented film comprising:
a first outer layer, a second outer layer, and a core, the core comprising one or more core layers; wherein the core is positioned between the first outer layer and the second outer layer, wherein the first outer layer comprises less than 50 wt.% of a high density polyethylene having a density from 0.940 to 0.973 g/cm³ and at least 50 wt.% of a polyethylene plastomer or elastomer having a density between 0.855 to 0.910 g/cm³, wherein weight percent is based on the total weight percent of polymers in the first outer layer, and wherein the first outer layer has a matte surface and a surface roughness of greater than 0.50 µm, and the film is stretched in the machine direction at a ratio of at least 4:1, and wherein the film is stretched at a temperature greater than 95°C.

3. The machine direction oriented film of any preceding claim, wherein the first outer layer has an overall density of less than 0.913 g/cm³.

4. The machine direction oriented film of any preceding claim, wherein the second outer layer comprises ethylene vinyl alcohol.

5. The machine direction oriented film of any preceding claim, wherein the film comprises at least 95 wt.% ethylene-based polymers, based on the total weight of polymers in the film.

6. The machine direction oriented film of any preceding claim, wherein the film is stretched at a temperature between 100 to 125°C.

7. The machine direction oriented film of any preceding claim, wherein the film has a surface roughness of greater than 0.60 µm, when the film is stretched at a temperature of 115°C.

8. The machine direction oriented film of any preceding claim, wherein the core comprises greater than 50 wt.% polyethylene having a density greater than 0.935 g/cm³, wherein weight percent is based on the total weight of polymers in the core.

9. The machine direction oriented film of any preceding claim, wherein the polyethylene plastomer or elastomer has at least one of the following characteristics: a) comprises 1-hexene, 1-octene, or combination thereof; b) a melt index (I₂) of less than 10.0 g/10 min; or c) a density of 0.860 to 0.890 g/cm³.

10. The machine direction oriented film of any preceding claim, wherein the film has a thickness between 20 and 80 microns after stretching.

11. The machine direction oriented film of any preceding claim, wherein the high density polyethylene has at least one of the following characteristics: a) comprises 1-hexene, 1-octene, or combination thereof; b) a homopolymer; c) a melt index (I₂) of less than 10.0 g/10 min; or d) a density of greater than 0.960 g/cm³.

12. The machine direction oriented film of any preceding claim, wherein the first outer layer comprises greater than 15% of the thickness of the film, where thickness is based on total thickness of the film.

13. The machine direction oriented film of any preceding claim, wherein the first outer layer comprises between 10 to 30 wt.% of the high density polyethylene and between 90 to 70 wt.% of the polyethylene plastomer or elastomer, wherein weight percent is based on the total weight percent of polymers in the first outer layer.

14. An article comprising the film of claims 1 to 13.

15. A process for making a machine oriented film, the process comprising:
providing a high density polyethylene having a density from 0.940 to 0.973 g/cm³;
providing a polyethylene plastomer or elastomer having a density between 0.855 to 0.910 g/cm³, wherein the difference between the densities of the high density polyethylene and the polyethylene plastomer or elastomer is at least 0.070 g/cm³;
coextruding a film comprising at least a first outer layer, a second outer layer, and a core, the core comprising one or more core layers; wherein the first outer layer comprises less than 50 wt.% of the high density polyethylene and less than 50 wt.% of the polyethylene plastomer or elastomer;
stretching the film in the machine direction at ratio of at least 4:1 and at a temperature greater than 95°C.
